# EUROPÄISCHE PATENTANMELDUNG

(11) **EP 2 821 201 A1**
(43) Veröffentlichungstag der Anmeldung: **07.01.2015**
(21) Anmeldenummer: 14175821.9
(22) Anmeldetag: 04.07.2014
(51) Int. Cl.: B29C 35/02, B29B 11/16, B29C 70/30

(54) **Faserhalbzeug-Temperiervorrichtung**

(30) Priorität: 05.07.2013 DE 102013107102
(71) Anmelder: Deutsches Zentrum für Luft- und Raumfahrt e.V., 51147 Köln (DE)
(72) Erfinder: Grohmann, Yannis, 20249 Hamburg (DE); Zacharias, Fabian, 01328 Dresden (DE)
(74) Vertreter: Aisch, Sebastian

(57) **Zusammenfassung**

Die Erfindung betrifft eine Faserhalbzeug-Temperiervorrichtung (1) und ein Verfahren zum Temperieren von Faservorformlingen (4), wobei mit Hilfe zweier Elektroden (6a, 6b) ein Stromfluss durch mehrere Faserhalbzeuglagen hindurch zur Temperierung erzeugt wird.

## Beschreibung

Die Erfindung betrifft eine Faserhalbzeug-Temperiervorrichtung zum Temperieren von aus mehreren Faserhalbzeuglagen gebildeten Faservorformlingen. Die Erfindung betrifft ebenso ein Verfahren hierzu.

Bauteile aus einem Faserverbundwerkstoff, so genannte Faserverbundbauteile sind aus der Luft- und Raumfahrt heute nicht mehr wegzudenken. Aber auch im Automobilbereich findet die Verwendung derartiger Werkstoffe immer mehr Zuspruch. Insbesondere kritische Strukturelemente werden auf Grund der hohen gewichtsspezifischen Festigkeit und Steifigkeit bei minimalem Gewicht aus faserverstärkten Kunststoffen gefertigt. Durch die aus der Faserorientierung resultierenden anisotropen Eigenschaften der Faserverbundwerkstoffe können Bauteile exakt an lokale Belastungen angepasst werden und ermöglichen so eine optimale Materialausnutzung im Sinne des Leichtbaus.

Im Fertigungsprozess kommen dabei neben trockenen Faserhalbzeugen wie Gelege und Gewebe auch so genannte Prepregs (mit einem Matrixmaterial vorimprägnierte Faserhalbzeuge) zum Einsatz. Durch die immer höheren Stückzahlen bei der Produktion von faserverstärkten Bauteilen bestehen große Bestrebungen, den Herstellungsprozess weitestgehend zu automatisieren, ohne dabei die Qualität des Herstellungsprozesses bzw. der herzustellenden Bauteile negativ zu beeinflussen.

Damit die spätere Bauteilform aus den Faserhalbzeugen hergestellt werden kann, werden während des sogenannten Preformens die Faserhalbzeuge häufig unter Aufbringung einer äußeren Kraft in ein Formwerkzeug drapiert, deren Werkzeugoberfläche eine der späteren Bauteilformen entsprechenden Geometrie aufweist. Um zu verhindern, dass während des Preformens sich die einzelnen Faserhalbzeuge, insbesondere während eines automatisierten Ablegeprozesses bzw. Drapierprozesses, verschieben, werden die Faserhalbzeuge gegenseitig fixiert, was beispielsweise durch ein Bindermaterial in Form eines Pulvers oder eines Vlies durch Einbringung von Wärmeenergie erfolgen kann. Bei den sogenannten Prepregs kann auch ohne Bindermaterial durch Einbringung von Wärme ein Anheften erreicht werden, da das in den vorimprägnierten Fasern enthaltene Matrixmaterial aufweicht oder aufschmilzt und so aneinander klebt.

Insbesondere bei großen Bauteilen und bei Bauteilen mit einem großen Lagenaufbau ist das Fixieren notwendig, um einzelne Lagen miteinander zu verbinden und die hergestellte Preform, auch Vorformling genannt, ein gewisses Maß an Eigensteifigkeit zu verleihen.

Darüber hinaus hat es sich gezeigt, dass erwärmte oder erhitzte Prepregs verbesserte Verarbeitungseigenschaften haben, so dass sich erwärmte oder erhitzte Prepregs besser in die gewünschte Bauteilform bringen lassen.

Aus der DE 10 2011 076 463 A1 ist ein Reparaturverfahren für ein Formteil aus einem Kunststoffmaterial bekannt, bei dem ein passives Heizelement in dem Reparaturbereich vorgesehen ist, das berührungslos von außen mit einem magnetischen Wechselfeld beaufschlagt wird.

Aus der DE 103 53 070 A1 ist ein Verfahren und eine Vorrichtung zur Binderaktivierung von Faserhalbzeugen bekannt, bei dem in dem Formwerkzeug zwei Elektroden vorgesehen sind, die mit den insbesondere äußeren Randbereichen der Preform in Berührung stehen. Wird nun eine Spannung an die Elektroden angelegt, so erfolgt ein Stromfluss durch die Preform, was zu einer Erwärmung und somit zu einer Binderaktivierung führt. Nachteilig hierbei ist jedoch, dass die gesamte Preform erwärmt werden soll, was insbesondere bei einer Preform mit großem Lagenaufbau zu hohen Stromflüssen führt. Denn durch die Anordnung der Elektroden im Formwerkzeug erfolgt in der Regel der Stromfluss durch die unteren Faserhalbzeuglagen, so dass eine Binderaktivierung in höheren Faserhalbzeuglagen nur durch eine hohe Wärmeabstrahlung der unteren Lagen und somit durch einen hohen Stromfluss erreicht werden kann.

Aus der DE 10 2011 108 157 A1 ist ein Formwerkzeug zur Herstellung von Faserverbundbauteilen bekannt, bei dem in dem Formwerkzeug eine Mehrzahl von Induktionsvorrichtungen vorgesehen sind, um so in das Formwerkzeug eingebrachte Faserverbundbauteil mittels Induktion zu erwärmen.

Eine ähnliche Vorrichtung ist auch aus der DE 10 2006 040 049 A1 bekannt, bei dem unter einem Vakuumsack die Faserhalbzeuglagen auf dem Formwerkzeug angeordnet sind. Durch eine Druckdifferenz werden die Kohlenstofffasern aneinander angedrückt, wobei mit Hilfe eines magnetischen Wechselfeldes elektrische Ströme in den Kohlenstofffasern zur Binderaktivierung erzeugt werden.

Aus der DE 10 2008 020 564 A1 ist eine Tapelegevorrichtung bekannt, bei der die Anpressrolle so ausgebildet ist, dass mit Hilfe von Infrarotstrahlung oder Induktion die abgelegten Fasertapes mit Wärmeenergie beaufschlagt werden können.

Ein wesentlicher Nachteil bei den aus dem Stand der Technik bekannten Verfahren ist die Tatsache, dass durch das Einbringen von Wärme in dem gesamten Bauteil meist ein großer Energieeintrag notwendig ist. Bei Einbringung von Wärmeenergien mittels Ultraschall besteht darüber hinaus das Problem, dass derartige Anlagen zum einen sehr komplex und aufwendig sind, und zum anderen aufgrund der Reibung im Material Faserondulationen entstehen können, die Fehlstellen im Bauteil hervorrufen.

Es ist daher Aufgabe der vorliegenden Erfindung eine verbesserte Faserhalbzeug-Temperiervorrichtung anzugeben, mit der das Temperieren einer Preform bzw. eines Faservorformlings vereinfacht werden kann, insbesondere um den Herstellungsschritt des Preformens schneller und sicherer zu gestalten, ohne dabei die Qualität des späteren Bauteils negativ zu beeinflussen.

Die Aufgabe der vorliegenden Erfindung wird mit den Merkmalen der Faserhalbzeug-Temperiervorrichtung gemäß Anspruch 1 sowie mit den Merkmalen des Verfahrens gemäß Anspruch 16 erfindungsgemäß gelöst.

Demnach wird erfindungsgemäß eine Faserhalbzeug-Temperiervorrichtung vorgeschlagen, die zum Temperieren von aus mehreren Faserhalbzeuglagen gebildeten Faservorformlingen vorgesehen ist. Die Faserhalbzeug-Temperiervorrichtung weist hierzu eine elektrische Kontakteinrichtung zur Erzeugung eines Stromflusses in dem Faservorformling auf, um aufgrund des erzeugten Stromflusses eine Temperierung lokal begrenzt oder vollflächig zu bewirken.

Erfindungsgemäß ist die Faserhalbzeug-Temperiervorrichtung dadurch gekennzeichnet, dass die elektrische Kontakteinrichtung mindestens ein erstes elektrisches Kontaktelement und mindestens ein zweites elektrisches Kontaktelement hat.

Das erste elektrische Kontaktelement der elektrischen Kontakteinrichtung ist dabei zum Kontaktieren einer ersten äußeren Seite des Faservorformlings ausgebildet, während das zweite elektrische Kontaktelement der elektrischen Kontakteinrichtung zum Kontaktieren einer der ersten äußeren Seite des Faservorformlings gegenüberliegenden zweiten äußeren Seite des Faservorformlings ausgebildet ist, so dass die elektrische Kontakteinrichtung der Faserhalbzeug-Temperiervorrichtung sowohl einen elektrischen Kontakt mit der ersten äußeren Seite des Faservorformlings als auch einen elektrischen Kontakt mit der gegenüberliegenden zweiten äußeren Seite des Faservorformlings hat.

Durch den elektrischen Kontakt an der ersten äußeren Seite und der zweiten äußeren Seite des Faservorformlings wird nun erfindungsgemäß erreicht, dass bei Anlegen einer elektrischen Spannung durch eine elektrische Energiequelle, bspw. eine elektrische Spannungsquelle, an den ersten und/oder zweiten Kontaktelementen ein Stromfluss durch die mehreren Faserhalbzeuglagen des Vorformlings zur Temperierung erzeugt wird. Der Stromfluss geht somit durch die mehreren Faserhalbzeuglagen, insbesondere quer zur Faserhalbzeugebene, durch den Faservorformling, wodurch aufgrund des elektrischen Widerstandes der Faser des Faservorformlings ein Teil der elektrischen Energie in Wärmeenergie umgewandelt wird. Je nach Art und Form der Kontaktierung der elektrischen Kontaktelemente wird der Faservorformling lokal begrenzt oder vollständig temperiert.

So kann durch diesen Eintrag von Wärmeenergien in den Faservorformling ein thermisch aktivierbares Bindermaterial zur Fixierung oder Konsolidierung aktiviert werden oder durch Aufheizen oder Aufschmelzen anderer Kunststoffe, insbesondere bereits vorimprägnierter Matrixmaterialien, eine Fixierung oder Konsolidierung erfolgen.

Mit Hilfe der vorliegenden erfindungsgemäßen Faserhalbzeug-Temperiervorrichtung kann somit je nach Ausgestaltung und Form der elektrischen Kontaktelemente eine lokal stark begrenzte oder vollflächige Temperierung durch die mehreren Faserhalbzeuglagen hindurch erzeugt werden. Hierbei lässt sich ein sehr einfacher Aufbau der elektrischen Kontakteinrichtung realisieren, die flexibel an sich ändernde Bauteilgeometrie angepasst werden kann oder sogar einfach auf andere Bauteilgeometrien übertragen werden kann. Darüber hinaus ist die für die Erwärmung notwendige elektrische Energie für eine lokal begrenzte Fixierung gegenüber einer vollflächigen Erwärmung des gesamten Faservorformlings sehr gering, was die Kosten während der Herstellung senkt und darüber hinaus einen vorteilhaften Beitrag zum Umweltschutz liefert.

Die Erfinder haben dabei erkannt, dass durch eine lokal begrenzte Erwärmung durch die mehreren Faserhalbzeuglagen des Faservorformlings hindurch eine so ausreichende Fixierung erreicht werden kann, so dass ein Verschieben oder Verrutschen der einzelnen Faserhalbzeuglagen vermieden wird. Auch wenn die Erwärmung mittels Stromfluss bei Faserhalbzeugen an und für sich bekannt ist, haben die Erfinder überraschenderweise festgestellt, dass ein Stromfluss durch die mehreren Faserhalbzeuglagen hindurch derart möglich ist, dass aufgrund des elektrischen Widerstandes der Fasern eine lokal begrenzte Erwärmung erreichbar ist.

Zudem erlaubt die vorliegende Erfindung eine sehr präzise regelbare, sichere und schnelle Fixierung der Faservorformlinge, wobei durch Einsatz mehrerer Punktkontaktelektroden als elektrische Kontaktelemente beispielsweise innerhalb kürzester Zeit und mit minimalem Energieaufwand sich eine Preform in gewünschter Form fixieren lässt.

Darüber hinaus kann mit der vorliegenden Erfindung vollflächige Erwärmung des Faservorformlings erreicht werden, um bspw. eine vollflächige Konsolidierung des Faservorformlings zu erreichen. Hierbei besteht der Vorteil darin, dass die Wärme in dem Faservorformling selbst entsteht und nicht bspw. ein notwendigen Werkzeug oder ein Wärmestrahler zusätzlich aufgeheizt werden müssen. Gegenüber der Induktionstechnologie hat die vorliegende Erfindung den Vorteil, dass sie einfacher und effektiver den Energieeintrag gewährleistet, wodurch Anlagenkosten eingespart und die Stückkosten von Faserverbundbauteilen reduziert werden kann.

Zur Erzeugung eines Stromflusses in dem Faservorformling muss dieser zumindest teilweise oder in Teilbereichen elektrisch leitfähig sein. Dies kann bspw. durch die Verwendung von elektrisch leitfähigen Fasern oder Faserhalbzeugen, wie bspw. Kohlenstofffasern oder Kohlenstofffaserhalbzeugen, erreicht werden. Denkbar ist aber auch, dass spezielle leitfähige Materialen wie Vliese oder Netze in den Faservorformling vorgesehen sind, die im späteren Bauteil verbleiben können.

Unter einem Temperieren des Faservorformlings wird im Sinne der vorliegenden Erfindung ein Erwärmen oder Aufheizen verstanden.

Unter einem Faservorformling bzw. einer Preform aus Faserhalbzeuglagen wird ein Fasergebilde verstanden, das aus mehreren Faserhalbzeuglagen von Faserhalbzeugen zusammengesetzt ist und ggf. der Geometrie des späteren herzustellenden Faserverbundbauteils entspricht. Die Geometrie des Faservorformlings kann dabei bereits die Endform des herzustellenden Faserverbundbauteils enthalten oder eine Vorstufe davon sein. Ein Faservorformling kann eine Faserhalbzeugzusammenstellung sein, die durch das Drapieren oder Ablegen von Faserhalbzeugen in oder auf ein Formwerkzeug entsteht und die Grundlage für die weiteren Herstellungsschritte bis zum fertigen Faserverbundbauteil bildet. Ein Faservorformling kann auch eine Faserhalbzeugzusammenstellung sein, die aus mehreren Sub-Preformen gebildet sind.

Die Faserhalbzeuge der Faserhalbzeuglagen können flächige oder drei dimensionale Faserhalbzeuge sein. Ein flächiges Faserhalbzeug ist ein textiles Flächengebilde, das aus einer Mehrzahl von Fasern, sogenannten Rovings, hergestellt wird. Die Orientierung der Fasern bzw. Rovings definiert dabei die Faserhalbzeugebene der flächigen, textilen Faserhalbzeuge.

Die Faserhalbzeuge der Faserhalbzeuglagen können aber auch Lagen aus Faserhalbzeugen sein, die selber eine Sub-Preform darstellen. Der Faservorformling wird dann aus einer Mehrzahl von Sub-Preformen gebildet.

Die Faserhalbzeuge können sowohl trockene Faserhalbzeuge als auch vorimprägnierte Faserhalbzeuge, sogenannte Prepregs, sein. Insbesondere trockene Faserhalbzeuge können dabei bereits ein entsprechendes Bindermaterial in Form von Pulver oder Vlies enthalten

Unter dem Fixieren des Faservorformlings wird dabei insbesondere verstanden, dass aneinander anliegende Fasern oder Faserhalbzeuge bzw. Faserhalbzeuglagen miteinander stoffschlüssig verbunden werden, beispielsweise durch Aktivierung eines Bindermaterials oder durch Aufheizen oder Aufschmelzen von bereits vorimprägniertem Matrixmaterial oder anderen Kunststoffverbindungen. Durch das Fixieren der Faserhalbzeuge des Faservorformlings soll ein Anheften der Faserhalbzeuge gegeneinander so erfolgen, dass ein Verschieben der Faserhalbzeuge im weiteren Herstellungsprozess verhindert werden kann.

Durch das Einbringen von Wärmeenergie kann des Weiteren eine Konsolidierung der Faserhalbzeuge erreicht werden, so dass die Faserhalbzeuge insbesondere während oder nach einem Umformprozess ihre vorgegebene Geometrie bzw. Form besser einhalten können.

Vorteilhafterweise weist das mindestens eine erste Kontaktelement und/oder das mindestens eine zweite Kontaktelement eine Kontaktfläche auf, die kleiner ist als 25 cm², vorzugsweise kleiner als 10 cm², besonders vorzugsweise kleiner als 2 cm² und ganz besonders vorzugsweise kleiner als 1 cm². Dabei wurde erkannt, dass bei kleineren Kontaktflächen eine sehr gleichmäßige Temperierung durch die Faserhalbzeuglagen hindurch erreicht werden kann, ohne dass es zur Bildung von "HotSpots" kommt. Je kleiner die Kontaktfläche ist, desto begrenzter und kontrollierbare die Erwärmung und desto schneller und energieschonender kann die Erwärmung erfolgen. Darüber hinaus kann durch eine kleine Kontaktfläche ein kleiner Fixierpunkt durch die Erwärmung erreicht werden, was die Drapierbarkeit des Faservorformlings wesentlich verbessert. Darüber hinaus ist es vorteilhaft, wenn der Stromfluss (pro Elektrode oder insgesamt für alle Elektroden) für weniger als 1 Sekunde erzeugt wird.

Vorteilhafterweise ist die elektrische Kontakteinrichtung derart ausgebildet, dass bei Anlegen der elektrischen Spannung an den ersten und/oder zweiten Kontaktelementen ein Stromfluss im Wesentlichen senkrecht zur Faserhalbzeugebene durch die mehreren Faserhalbzeuglagen hindurch erzeugt wird. Hierzu ist es besonders vorteilhaft, wenn das mindestens eine erste elektrische Kontaktelement und das mindestens eine zweite elektrische Kontaktelement senkrecht in Bezug auf die Faserhalbzeugebene fluchten.

Ganz besonders vorteilhaft ist es, wenn die elektrische Kontakteinrichtung zum Aufbringen einer Anpresskraft durch das erste Kontaktelement auf die erste äußere Seite und/oder durch das zweite Kontaktelement auf die zweite äußere Seite des Faservorformlings in Richtung des Faservorformlings zur Kompaktierung der Fasern ausgebildet ist. Durch die Kompaktierung der Fasern im Bereich des ersten Kontaktelementes und/oder des zweiten Kontaktelementes, die bspw. durch eine definierte Flächenpressung entsteht, wird der elektrische Widerstand verringert, so dass gezielt ein Stromfluss zwischen dem ersten Kontaktelement und dem zweiten Kontaktelement bewirkt werden kann. Hierdurch lässt sich bspw. gezielt die Temperierung lokal beschränken. Aber auch bei vollflächiger Temperierung kann durch die Kompaktierung der Fasern erreicht werden, dass ein Stromfluss im gesamten Faservorfromling erreicht wird, da durch die Kompaktierung eine Reduzierung des elektrischen Widerstandes im gesamten Faservorformling bewirkt wird. Darüber hinaus wird durch die Kompaktierung eine Verringerung der Grenzschichten zwischen den Fasern erreicht, so dass für die Erzeugung des Stromflusses zwecks Temperierung die angelegte Spannung geringer eingestellt werden kann.

In einer sehr vorteilhaften Ausführungsform ist die elektrische Kontakteinrichtung zangenförmig ausgebildet, wobei an deren Zangenkopf das erste und das zweite elektrische Kontaktelement gegenüberliegend angeordnet sind. Beim Kontaktieren des ersten elektrischen Kontaktelementes mit der ersten äußeren Seite und des zweiten elektrischen Kontaktelementes mit der zweiten äußeren Seite fluchten die Kontaktelemente im Wesentlichen durch die Faserhalbzeuglagen des Faservorformlings. Durch die zangenförmige Ausbildung der elektrischen Kontakteinrichtung kann darüber hinaus, manuell oder mit Antriebsunterstützung, die gewünschte Anpresskraft erzeugt werden, indem der Zangenkopf mit den beiden elektrischen Kontaktelementen zusammengedrückt wird.

In einer anderen sehr vorteilhaften Ausführungsform umfasst die Faserhalbzeug-Temperiervorrichtung ein Formwerkzeug zur Ausformung eines aus mehreren Faserhalbzeuglagen gebildeten Faservorformlings. Das Formwerkzeug kann dabei der späteren Bauteilgeometrie entsprechen oder ein ebenes Werkzeug ohne besondere Geometrie sein. Das Formwerkzeug kann auch ein Rotationskörper sein, bspw. eine Walze oder ein Kegel, durch den das Faserhalbzeug aufgrund der Drehbewegung seine Geometrie verliehen bekommt. Das mindestens eine erste elektrische Kontaktelement ist dabei in oder an dem Formwerkzeug, insbesondere in der Werkzeugoberfläche vorgesehen und so ausgebildet, dass es mit der ersten äußeren Seite des Faservorformlings kontaktiert, wenn sich der Faservorformling in oder auf dem Formwerkzeug befindet. Diese erste äußere Seite des Faservorformlings ist somit diejenige Seite des Faservorformlings, die an der Werkzeugoberfläche des Formwerkzeuges formschlüssig anliegt. In der Regel wird somit die erste äußere Seite des Faservorformlings durch eine Faserhalbzeuglage gebildet, die später auch eine äußere Seite des herzustellenden Faserverbundbauteils definieren.

Bevorzugter Weise ist das mindestens eine zweite elektrische Kontaktelement nicht in oder an dem Formwerkzeug vorgesehen. Die erste und die zweite äußere Seite des Faservorformlings werden somit durch die außen liegenden Faserhalbzeuglagen begrenzt. Die erste und die zweite äußere Seite des Faservorformlings ist somit nicht die umlaufende Kante des Faservorformlings. Die erste und die zweite äußere Seite des Faservorformlings kann somit die äußere Begrenzung parallel zur Faserhalbzeugebene sein.

Ganz besonders vorteilhaft ist es hierbei, wenn das erste elektrische Kontaktelement durch das Formwerkzeug selbst gebildet wird oder die Werkzeugoberfläche des Formwerkzeuges aus einem elektrisch leitfähigen Material besteht, so dass die gesamte Oberfläche des Formwerkzeuges das erste elektrische Kontaktelement bildet. Dies hat den Vorteil, dass unabhängig von der Größe und den Abmessungen des herzustellenden Bauteils eine flexible Fixierung der Faserhalbzeuge ermöglicht wird, ohne die elektrische Kontakteinrichtung an die geänderten Anforderungen anpassen zu müssen.

Alternativ ist es aber auch denkbar, dass die elektrische Kontakteinrichtung eine Mehrzahl von ersten elektrischen Kontaktelementen hat, die in oder an dem Formwerkzeug gegenseitig isolierend angeordnet sind. Hierdurch lässt sich ein Formwerkzeug realisieren, welches an bestimmten Positionen auf der Werkzeugoberfläche entsprechend elektrisch leitend ist, wodurch sich entsprechende Fixierungsmuster herstellen lassen.

In einer vorteilhaften Ausführungsform hierzu weist die Faserhalbzeug-Temperiervorrichtung eine Vakuumvorrichtung auf, die zu dem Formwerkzeug abgedichtet und zum Evakuieren des unter der Vakuumvorrichtung angeordneten Faservorformlings ausgebildet ist. Des Weiteren ist das zweite elektrische Kontaktelement ebenfalls unter der Vakuumvorrichtung angeordnet, wobei beim Evakuieren des Faservorformlings eine Kompaktierung der Fasern des Faservorformlings erfolgt, die durch das zweite elektrische Kontaktelement unterstützt wird. Hierdurch lässt sich unter einem herkömmlichen Vakuumaufbau eine vollflächige Temperierung des Faservorformlings durch Anlegen einer Spannung und Erzeugen eines Stromflusses in dem Faservorformling erreichen.

In einer weiteren, ganz besonders vorteilhaften Ausführungsform ist eine Bewegungsvorrichtung vorgesehen, die zum Bewegen des mindestens einen ersten und/oder zweiten elektrischen Kontaktelementes gegenüber dem Faservorformling und/oder die zum Bewegen des Faservorfromlings gegenüber dem mindestens einen ersten und/oder zweiten elektrischen Kontaktelement ausgebildet ist, so dass eine flexible Positionierung der Fixier- bzw. Kontaktpunkte erreicht werden kann. Dies ist bspw. im Zusammenhang mit einem elektrisch leitenden Formwerkzeug besonders vorteilhaft, da die Gegenelektrode (erstes elektrisches Kontaktelement) durch die gesamte Werkzeugoberfläche gebildet wird und das zweite elektrische Kontaktelement somit für einen durch die mehreren Lagen flächiger Faserhalbzeuge hindurch zu erzeugenden Stromfluss wahlweise positionierbar ist. Denkbar ist allerdings auch, dass der Faservorformlings gegenüber den Kontaktelementen bewegt wird, bspw. mittels eines bewegbar ausgeführten Werkzeuges, auf dem der Faservorformling aufliegt.

Denkbar ist aber auch, dass die zangenförmige Kontakteinrichtung nach der Kontaktierung und Aufbringung der Anpresskraft zum Bewegen der elektrischen Kontaktelemente ausgebildet ist.

Hierbei ist es nun ganz besonders vorteilhaft, wenn die Bewegungsvorrichtung zum Ansteuern mit einer Steuereinheit verbunden ist, wobei die Steuereinheit so ausgebildet ist, dass eine relative Bewegung zwischen dem mindestens einen ersten und/oder zweiten Kontaktelement und dem Faservorformling während der Kontaktierung mit der jeweiligen äußeren Seite des Faservorformlings gemäß einem vordefinierten Bewegungsmuster unter Anlegung der elektrischen Spannung bewirkt wird. Hierdurch lassen sich vorgegebene Fixierlinien oder Fixiermuster erzeugen, die zu einer Fixierung der Faserhalbzeuge führen. Das vorgegebene Bewegungsmuster kann dabei in Abhängigkeit der jeweiligen Bauteilform vorgegeben werden.

Vorteilhafterweise kann die elektrische Energiequelle so eingerichtet sein, dass sie durch Anlegen der Spannung einen ununterbrochenen Stromfluss oder einen gepulsten Stromfluss erzeugt. Bei einem gepulsten Stromfluss wird dabei über die Zeit in diskreten Zeitabständen die angelegte Spannung unterbrochen, was insbesondere während einer Bewegung gemäß eines Bewegungsmusters besonders vorteilhaft ist, da sich hierdurch nicht nur geometrische Fixiermuster einstellen lassen, sondern auch lokale Begrenzungen innerhalb des Musters erreichen lassen. So ist es beispielweise denkbar, dass eine gestrichelte Fixierlinie durch wiederholtes Unterbrechen der angelegten Spannung erzeugt wird.

Die elektrische Energiequelle kann weiterhin so eingerichtet sein, dass das Anlegen der Spannung an die Kontaktelemente entsprechend gesteuert werden kann. Somit lässt sich bspw. der Energieeintrag, die in das Faserhalbzeug eingebracht werden soll, einstellen bzw. vorgeben. So ist es beispielsweise vorteilhaft, wenn das Anlegen der Spannung so gesteuert wird, dass der Energieeintrag in den Faservorformling auch zeitlich gesteuert wird, beispielsweise derart, dass ein vorgegebener Energieeintrag pro Fläche und/oder Länge des Faservorformlings bewirkt wird. Auch lässt sich durch eine separate Ansteuerung der einzelnen Kontaktelemente gezielt der Stromfluss in den Faserhalbzeugen steuern. So ist es denkbar, dass einzelne elektrische Kontaktelemente der ersten und/oder zweiten elektrischen Kontaktelemente zu- oder abgeschaltet werden.

So ist es bspw. denkbar, dass in Abhängigkeit von einer Geschwindigkeit einer relativen Bewegung zwischen dem mindestens einen ersten und/oder zweiten elektrischen Kontaktelement und dem Faservorformling die Leistung der angelegten elektrischen Spannung durch die elektrische Energiequelle gesteuert wird. So lässt sich bspw. das Anlegen einer elektrischen Spannung so steuern, dass bei geringen Relativgeschwindigkeiten eine geringere elektrische Leistung vorliegt und mit zunehmender Relativgeschwindigkeit die elektrische Leistung erhöht wird.

In einer weiteren vorteilhaften Ausführungsform sind eine Mehrzahl von ersten und/oder zweiten elektrischen Kontaktelementen vorgesehen. Hierzu ist es besonders vorteilhaft, wenn die elektrische Energiequelle eingerichtet ist, nacheinander jeweils an einem der ersten elektrischen Kontaktelemente eine elektrische Spannung anzulegen und die übrigen Kontaktelemente so zu schalten, dass ein Stromfluss zwischen dem jeweiligen ersten elektrischen Kontaktelement und einem vorgegebenen zweiten elektrischen Kontaktelement erzeugt wird. Der Vorteil hierbei ist, dass sich insbesondere bei großen Faservorformlingen eine großflächige Temperierung erreichen lässt. Hierfür werden die ersten elektrischen Kontaktelemente nacheinander mit einer elektrischen Spannung angelegt, so dass sich ein Stromfluss zu einem vorgegebenen zweiten elektrischen Kontaktelement bewirken lässt.

Vorteilhafterweise hat das mindestens eine erste und/oder zweite Kontaktelement eine Rollen-, Kugel- oder Gleitelektrode, so dass während des Kontaktierens der jeweiligen äußeren Seite des Faservorformlings eine relative Bewegung gegenüber dem Faservorformling ermöglicht wird, ohne die Fasern des Faservorformlings zu beschädigen.

In einer weiteren vorteilhaften Ausführungsform ist mindestens das erste und/oder mindestens das zweite Kontaktelemente als Kontaktwalze ausgebildet, wobei die elektrische Kontaktierung über die Umfangsfläche mit dem Faserhalbzeug erfolgt. Ganz besonders vorteilhaft ist es hierbei, wenn das erste Kontaktelement und das zweite Kontaktelement als Kontaktwalze ausgebildet sind und ein Walzenpaar derart bilden, dass die mehreren Lagen Faserhalbzeug durch die beiden Walzen hindurchgeführt werden. Hierbei wird der Faservorformling relativ zu den beiden Kontaktwalzen gefördert bzw. verfahren.

Dies ist beispielsweise dann besonders vorteilhaft, wenn aus mehreren einzelnen Faserhalbzeugen der Faservorformling hergestellt werden soll, wobei durch den bewirkten Stromfluss eine Erwärmung des Faserhalbzeuges stattfindet, wodurch beispielsweise eine Konsolidierung erreicht werden kann, um den Faservorformling in seiner Geometrie zu fixieren.

Hierbei sind verschiedene Ausführungsformen der Walzen denkbar, beispielsweise eine Mehrzahl von ersten Kontaktwalzen und eine Mehrzahl von zweiten Kontaktwalzen. Denkbar ist auch, dass an einer Kontaktwalze mehrere Elektroden isoliert vorgesehen sind.

Darüber hinaus ist es denkbar, dass die Kontaktwalzen als Kontaktelement Elektroden aufweisen, die radial nach außen abstehend von der Kontaktwalze vorgesehen sind. Hierdurch ergibt sich eine Art Pickel- oder Buckelwalze, mit der punktuell die Anpresskraft und somit die Kompaktierung der Fasern erhöht werden kann, bei gleichzeitigem Energieeintrag in das Faserhalbzeug.

Darüber hinaus ist es denkbar, dass das erste und/oder zweite Kontaktelement (6b) eine Rollen-, Kugel- oder Gleitelektrode hat.

Darüber hinaus wird die Aufgabe auch mit einem Verfahren zum Temperieren von aus mehreren Faserhalbzeuglagen gebildeten Faservorformlingen gelöst. Vorteilhafte Ausgestaltungen des Verfahrens finden sich in den entsprechenden Unteransprüchen.

Vorteilhafterweise wird ist das Verfahren gekennzeichnet durch durch Drapieren oder Ablegen von Faserhalbzeugen in oder auf ein Formwerkzeug zur Bildung eines aus mehreren Faserhalbzeuglagen gebildeten Faservorformlings.

Die Erfindung wird anhand der beigefügten Zeichnungen beispielhaft erläutert. Es zeigen:
- Figur 1: - Schematische Darstellung der erfindungsgemäßen Faserhalbzeug-Temperiervorrichtung;
- Figur 2: - Schematische Darstellung eines Fixiermusters;
- Figur 3: - Schematische Darstellung einer zangenförmigen Temperiervorrichtung;
- Figur 4: - Schematische Darstellung einer Temperierung unter Vakuum;
- Figur 5: - Schematische Darstellung einer Konsolidierungsvorrichtung.

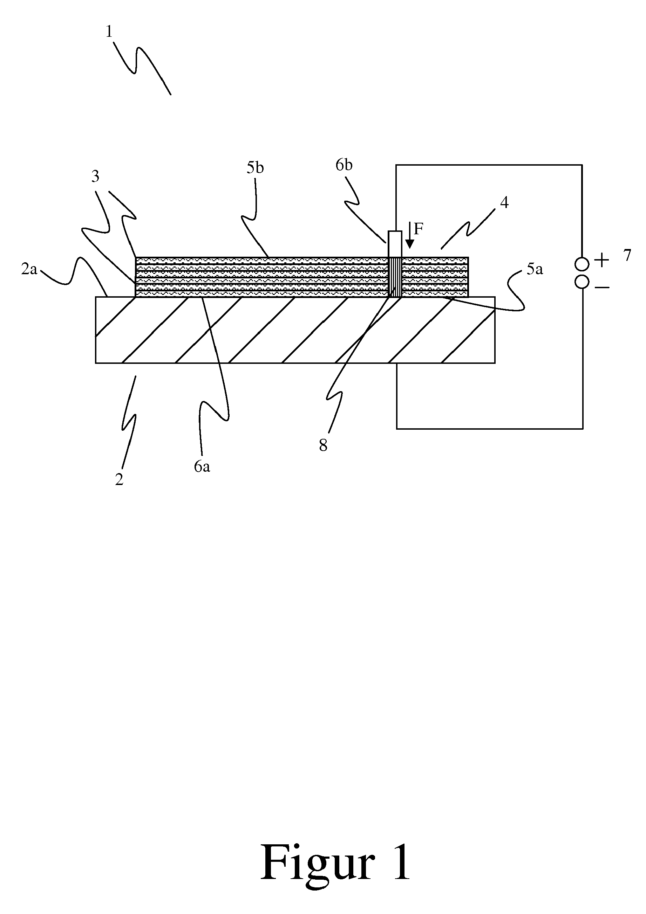

Figur 1 zeigt schematisch die Faserhalbzeug-Temperiervorrichtung 1, die zumindest ein Formwerkzeug 2 aufweist, welches eine formgebende Werkzeugoberfläche 2a hat. Die formgebende Werkzeugoberfläche 2a entspricht dabei der Geometrie der herzustellenden Bauteilform, wobei in Figur 1 aus Übersichtlichkeitsgründen eine flache Form dargestellt ist.

Auf der Werkzeugoberfläche 2a werden nun nacheinander mehrere Faserhalbzeuglagen 3 abgelegt, so dass ein Faservorformling 4, auch Preform genannt, gebildet wird. Der Faservorformling 4 weist somit eine erste äußere Seite 5a auf, die zumindest teilweise mit der Werkzeugoberfläche 2a des Formwerkzeuges 2 formschlüssig kontaktiert ist, und eine gegenüberliegende zweite äußere Seite 5b.

Die Faserhalbzeug-Temperiervorrichtung 1 weist darüber hinaus eine elektrische Kontakteinrichtung 6 auf, die ein erstes elektrisches Kontaktelement 6a und ein zweites elektrisches Kontaktelement 6b hat. Das erste elektrische Kontaktelement 6a wird dabei durch eine elektrisch leitende Werkzeugoberfläche 2a gebildet, beispielsweise derart, dass das gesamte Formwerkzeug 2 aus einem elektrisch leitfähigen Material besteht und aus diesem gebildet ist. Denkbar ist allerdings auch, dass nur Teile der Werkzeugoberfläche 2a elektrisch leitend ausgebildet sind.

Das erste elektrische Kontaktelement 6a ist im Ausführungsbeispiel der Figur 1 somit vollflächig mit der gesamten ersten äußeren Seite 5a des Faservorformlings 4 kontaktiert.

An der zweiten Seite 5b des Faservorformlings 4 wird das zweite elektrische Kontaktelement 6b kontaktiert, so dass zumindest in einem Bereich je nach Ausgestaltung und Form des zweiten elektrischen Kontaktelementes 6b ein Kontaktbereich auf der zweiten äußeren Seite des Faservorformlings erzeugt wird.

Wird nun mittels einer elektrischen Energiequelle 7 eine Spannung an die Kontaktelemente 6a, 6b angelegt, so erfolgt ein Stromfluss 8 durch die einzelnen Lagen der flächigen Faserhalbzeuge 3 hindurch, so dass im Bereich des Stromflusses 8 eine lokal stark begrenzte Erwärmung stattfindet. Nur in diesem Bereich wird somit der Faservorformling 4 erwärmt, was zu einer Fixierung in diesem Bereich führt. Durch das Aufbringen einer Kraft F in Richtung des Faservorformlings entsteht eine Kompaktierung der Fasern im Bereich des Stromflusses 8, wodurch der elektrische Widerstand des Faservorformlings in diesem Bereich verringert wird. Hierdurch wird die Richtung des Stromflusses durch die Faserhalbzeuglagen 3 in Richtung Werkzeugoberfläche 2a gesteuert und gelenkt.

Der Stromfluss 8 erfolgt dabei im Ausführungsbeispiel der Figur 1 quer bzw. senkrecht zur Faserhalbzeugebene der einzelnen Faserhalbzeuge 3, was zu einer besonders guten lokalen Temperierung in diesem Bereich durch alle Lagen hindurch führt, bspw. zum Fixieren der einzelnen Lagen.

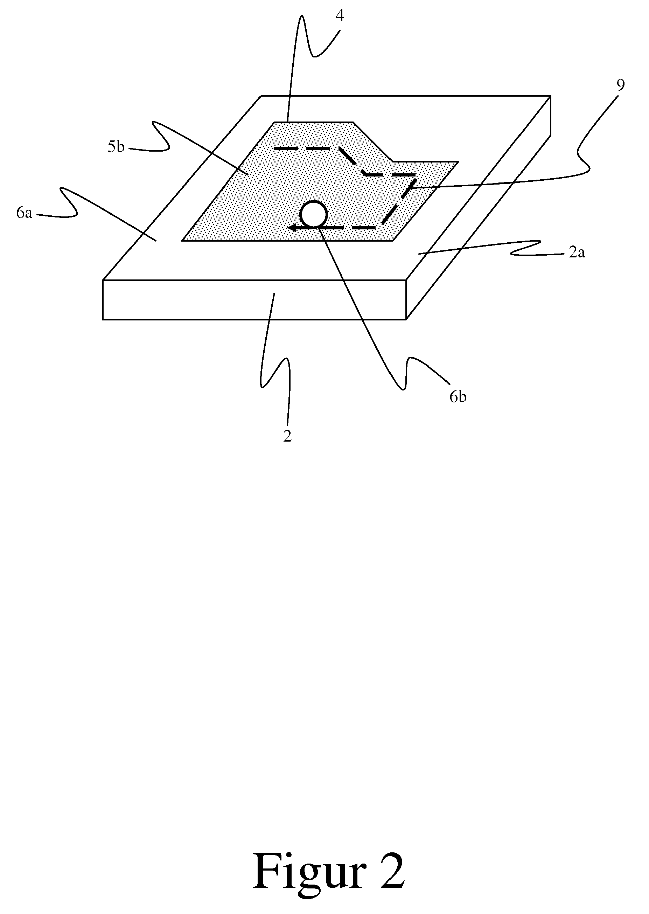

Figur 2 zeigt schematisch stark reduziert ebenfalls eine Faserhalbzeug-Temperiervorrichtung, wobei der Faservorformling 4 auf dem Formwerkzeug 2 perspektivisch dargestellt ist. Auch hier ist die Werkzeugoberfläche 2a elektrisch leitend ausgebildet und formt somit das erste elektrische Kontaktelement 6a.

Das zweite elektrische Kontaktelement 6b ist als Rollenelektrode ausgebildet und somit während der Kontaktierung mit der zweiten äußeren Seite 5b des Faservorformlings 4 verfahrbar.

Die Rollenelektrode 6b fährt dabei ein Bewegungsmuster bzw. Fixiermuster 9 ab, das in Figur 2 als gestrichelte Linie auf der zweiten äußeren Seite des Faservorformlings 4 dargestellt ist. Dabei wird neben dem Bewegungsmuster auch in diskreten Zeitabständen der Stromfluss bzw. das Anlegen der Spannung unterbrochen, wodurch sich beim Abfahren der Linie 9 Stellen ergeben, an denen eine Erwärmung durch den Faservorformling 4 erfolgt und Stellen ergeben, an denen keine Erwärmung erfolgt. Eine Fixierung erfolgt somit ähnlich dem Vernähen von textilen Halbzeugen.

Die flächigen Faserhalbzeuge 3 können im Sinne der vorliegenden Erfindung beispielsweise Kohlenstofffasern enthalten, welche elektrisch leitend sind. Allgemeiner, die flächigen Faserhalbzeuge können im Sinne der vorliegenden Erfindung ein elektrisch leitendes oder leitfähiges Material enthalten oder aus diesem gebildet sein.

Alternativ ist es auch denkbar, dass das erste elektrische Kontaktelement 6a durch das Formwerkzeug 2 gebildet wird, während das zweite elektrische Kontaktelement 6b in der Ablegerolle oder Faserführung eines FaserhalbzeugAblegekopfes integriert ist, beispielsweise derart, dass am Umfang der Ablegerolle oder einer Umlenkrolle ein elektrisch leitfähiges Material angeordnet ist, das mit der Spannungsquelle kontaktiert ist. Hierdurch lässt sich bereits während des Ablegens von flächigen Faserhalbzeugen ein lokal begrenzter Stromfluss durch die mehreren Lagen flächiger Faserhalbzeuge hindurch erzeugen, so dass das Ablegen flächiger Faserhalbzeuge und Fixieren in einem Prozessschritt durchführbar ist.

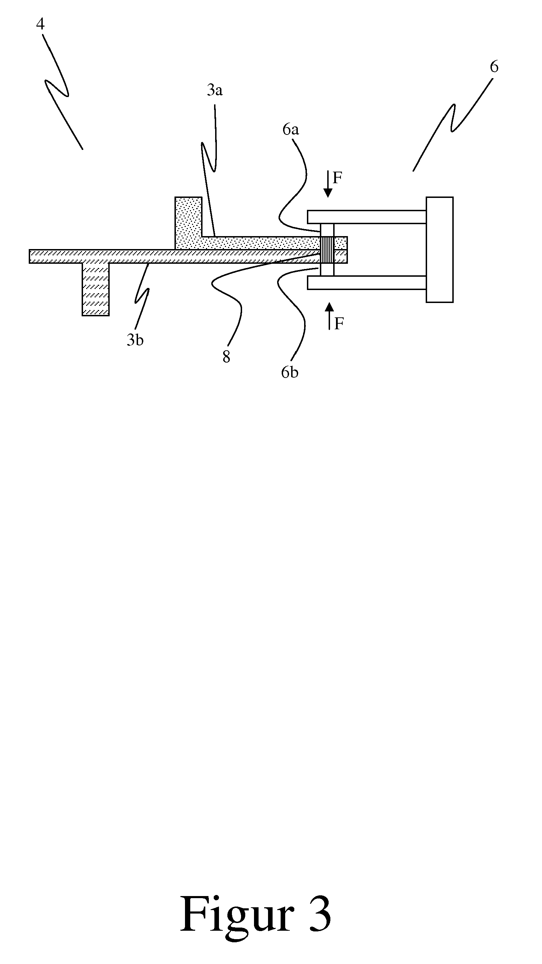

Figur 3 zeigt schematisch die Darstellung einer zangenförmigen Temperiervorrichtung, bei der das elektrische Kontaktelement 6 als Zange ausgebildet ist. Dies kann beispielsweise eine elektromechanische Zange sein, bei dem die beiden Zangenköpfe gegeneinander verfahrbar sind. An dem Zangenkopf der elektrischen Kontakteinrichtung 6 ist auf der einen Seite das erste elektrische Kontaktelement 6a und gegenüberliegend das zweite elektrische Kontaktelement 6b angeordnet.

Im Ausführungsbeispiel der Figur 3 soll dabei ein Faservorformling 4 bestehend aus einer ersten Sub-Preform 3a und einer zweiten Sub-Preform 3b gegeneinander fixiert werden. Beide Sub-Preformen 3a und 3b bilden dabei jeweils eine Faserhalbzeuglage, die im Ausführungsbeispiel der Figur 3 jeweils dreidimensional ausgebildet sind.

Durch das Kontaktieren der elektrischen Kontaktelemente 6a und 6b an der jeweiligen äußeren Seite der jeweiligen Sub-Preformen 3a, 3b und durch Aufbringen einer Anpresskraft F zum Kompaktieren der Fasern der Sub-Preformen 3a, 3b im Kontaktierungsbereich kann durch Anlegen einer Spannung an den elektrischen Kontaktelementen 6a, 6b ein Stromfluss 8 zwischen den elektrischen Kontaktelementen der elektrischen Kontakteinrichtung 6 erzeugt werden, so dass in diesem Bereich eine Temperierung des Faservorformlings 4 bewirkt wird. Hierdurch lässt sich, wie bereits vorstehend beschrieben, eine Fixierung der beiden Sub-Preformen 3a, 3b gegeneinander erreichen.

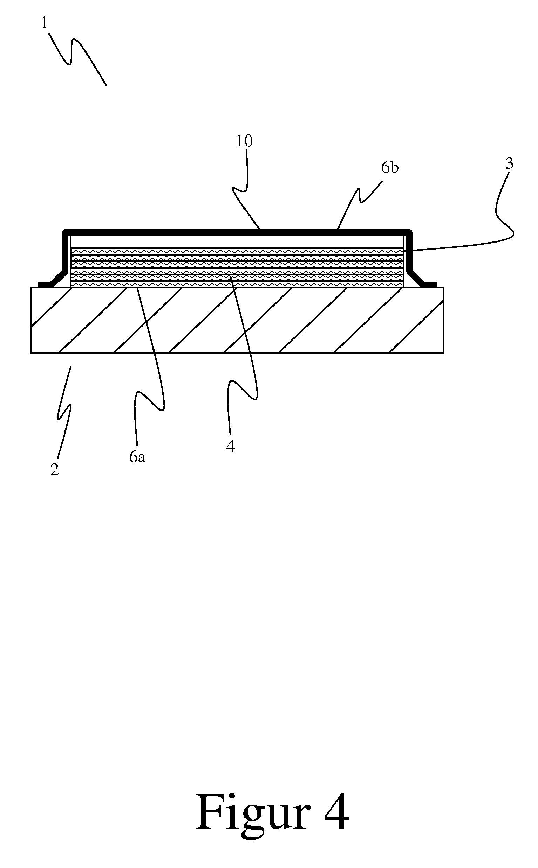

Figur 4 zeigt schematisch ein weiteres Ausführungsbeispiel für eine vollflächige Temperierung unter einem Vakuumaufbau. Hierzu sind mehrere Faserhalbzeuglagen 3 unter einer Vakuumvorrichtung 10 angeordnet, so dass der aus den Faserhalbzeuglagen 3 gebildete Faservorformling 4 evakuiert werden kann. Hierdurch entsteht eine Kompaktierung der Fasern des Faservorformlings.

Des Weiteren ist erfindungsgemäß unter der Vakuumvorrichtung 10 das zweite elektrische Kontaktelement 6b elektrisch kontaktierend mit dem Faservorformling 4 angeordnet, um so in dem Faservorformling 4 einen Stromfluss zu erzeugen. Das erste elektrische Kontaktelement 6a wird dabei durch eine elektrisch leitende Werkzeugoberfläche des Formwerkzeuges 2 gebildet.

Durch eine vollflächige Kompaktierung wird dabei erreicht, dass der elektrische Widerstand im gesamten Faservorformling reduziert wird, was zu einem verbesserten Stromfluss durch den gesamten Faservorformling führt und somit den Energieeintrag insgesamt verbessert.

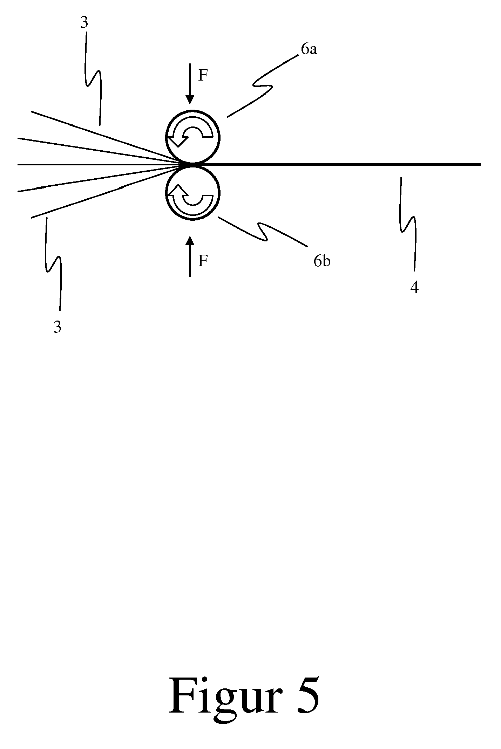

Figur 5 zeigt schematisch eine Konsolidierungsvorrichtung, bei der zwei Kontaktwalzen als Kontaktelemente vorgesehen sind. Eine Mehrzahl von Faserhalbzeugen 3 wird dabei zwischen die beiden Kontaktwalzen 6a, 6b geführt, wobei die Kontaktwalzen 6a, 6b eine Kraft in Richtung der dazwischen geführten Faserhalbzeuge aufbringen. Zwischen der Kontaktwalze 6a und der Kontaktwalze 6b wird nun durch Anlegen einer elektrischen Spannung ein Stromfluss in den Faservorformling 4 durch die einzelnen Lagen hindurch bewirkt, so dass hierbei beispielsweise ein Bindermaterial thermisch aktiviert werden kann, was zu einer Konsolidierung des Faservorformlings 4 führt. Der Faservorformling 4 wird somit als Laminat aus mehreren Lagen Faserhalbzeug bei gleichzeitiger Konsolidierung hergestellt.

### Bezugszeichenliste

- 1: Faserhalbzeug-Fixiervorrichtung
- 2: Formwerkzeug
- 2a: Werkzeugoberfläche
- 3: Faserhalbzeuglagen
- 4: Faservorformling
- 5a: erste äußere Seite des Faservorformlings
- 5b: gegenüberliegende zweite äußere Seite des Faservorformlings
- 6: elektrische Kontakteinrichtung
- 6a: erstes elektrisches Kontaktelement
- 6b: zweites elektrisches Kontaktelement
- 7: Elektrische Energiequelle
- 8: Stromfluss
- 9: Bewegungsmuster bzw. Fixiermuster
- 10: Vakuumvorrichtung F Anpresskraft zur Kompaktierung

## Patentansprüche

1. Faserhalbzeug-Temperiervorrichtung (1) zum Temperieren von einem aus mehreren Faserhalbzeugelagen (3) gebildeten Faservorformlings (4) mit einer elektrischen Kontakteinrichtung zur Erzeugung eines Stromflusses (8) in dem Faservorformling (4), **dadurch gekennzeichnet, dass**
a) die elektrische Kontakteinrichtung mindestens ein erstes elektrisches Kontaktelement (6a) hat, das zum Kontaktieren einer ersten äußeren Seite (5a) des Faservorformlings (4) ausgebildet ist, und
b) die elektrische Kontakteinrichtung mindestens ein zweites elektrisches Kontaktelement (6b) hat, das zum Kontaktieren einer der ersten äußeren Seite (5a) des Faservorformlings (4) gegenüberliegenden zweiten äußeren Seite (5b) des Faservorformlings (4) ausgebildet ist,
wobei die elektrische Kontakteinrichtung derart eingerichtet ist, dass bei Anlegen einer elektrischen Spannung durch eine elektrische Energiequelle (7) an dem mindestens einen ersten und/oder zweiten Kontaktelement (6a, 6b) ein Stromfluss (8) durch die mehreren Faserhalbzeugelagen (3) des Faservorformlings (4) zur Temperierung erzeugt wird.

2. Faserhalbzeug-Temperiervorrichtung (1) nach Anspruch 1, **dadurch gekennzeichnet, dass** das mindestens eine erste elektrische Kontaktelement (6a) und/oder das mindestens eine zweite elektrische Kontaktelement (6b) eine Kontaktfläche aufweist, die kleiner als 25 cm², vorzugsweise kleiner als 10 cm², besonders vorzugsweise kleiner als 2 cm², ganz besonders vorzugsweise kleiner als 1 cm² ist.

3. Faserhalbzeug-Temperiervorrichtung (1) nach Anspruch 1 oder 2, **dadurch gekennzeichnet, dass** die elektrische Kontakteinrichtung derart ausgebildet ist, dass bei Anlegen der elektrischen Spannung an den ersten und/oder zweiten Kontaktelementen (6a, 6b) ein Stromfluss (8) im Wesentlichen senkrecht zur Faserhalbzeugebene durch die mehreren Faserhalbzeuglagen (3) des Faservorformlings (4) erzeugt wird, und/oder dass die elektrische Kontakteinrichtung zum Aufbringen einer Anpresskraft durch das erste Kontaktelement (6a) auf die erste äußere Seite (5a) und/oder durch das zweite Kontaktelement (6b) auf die zweite äußere Seite (5b) des Faservorfromlings (4) in Richtung des Faservorformlings (4) zur Kompaktierung der Fasern im Bereich des ersten und/oder zweiten Kontaktelementes ausgebildet ist..

4. Faserhalbzeug-Temperiervorrichtung (1) nach einem der vorhergehenden Ansprüche, **dadurch gekennzeichnet, dass** die elektrische Kontakteinrichtung eine zangenförmige Kontaktvorrichtung (6) bildet, an deren Zangenkopf das erste elektrische Kontaktelement (6a) und das zweite elektrische Kontaktelement (6b) gegenüberliegend angeordnet sind.

5. Faserhalbzeug-Temperiervorrichtung (1) nach einem der Ansprüche 1 bis 3, **dadurch gekennzeichnet, dass** die Faserhalbzeug-Temperiervorrichtung (1) ein Formwerkzeug (2) zur Ausformung eines aus mehreren Faserhalbzeuglagen (3) gebildeten Faservorformlings (4) hat, wobei das erste elektrische Kontaktelement (6a) der elektrischen Kontakteinrichtung an oder in dem Formwerkzeug (2) vorgesehen ist.

6. Faserhalbzeug-Temperiervorrichtung nach Anspruch 5, **dadurch gekennzeichnet, dass** das erste elektrische Kontaktelement (6a) durch das Formwerkzeug (2) oder durch eine elektrisch leitende Werkzeugoberfläche (2a) des Formwerkzeuges (2) gebildet wird, oder dass die elektrische Kontakteinrichtung eine Mehrzahl von ersten elektrischen Kontaktelementen (6a) hat, die an oder in dem Formwerkzeug (2) gegenseitig isolierend vorgesehen sind..

7. Faserhalbzeug-Temperiervorrichtung (1) nach einem der Ansprüche 5 oder 6, **dadurch gekennzeichnet, dass** eine zu dem Formwerkzeug abgedichtete Vakuumvorrichtung zum Evakuieren des unter der Vakuumvorrichtung angeordneten Faservorformlings vorgesehen ist, wobei das mindestens eine zweite elektrische Kontaktelement ebenfalls unter der Vakuumvorrichtung angeordnet ist.

8. Faserhalbzeug-Temperiervorrichtung (1) nach einem der vorhergehenden Ansprüche, **dadurch gekennzeichnet, dass** die elektrische Kontakteinrichtung eine Mehrzahl von ersten elektrischen Kontaktelementen (6a) und/oder eine Mehrzahl von zweiten elektrischen Kontaktelementen (6b) hat, die gegeneinander isolierend vorgesehen sind.

9. Faserhalbzeug-Temperiervorrichtung (1) nach Anspruch 8, **dadurch gekennzeichnet, dass** die elektrische Energiequelle (7) eingerichtet ist, nacheinander jeweils an einem der ersten elektrischen Kontaktelemente (6a) eine elektrische Spannung anzulegen und die übrigen elektrischen Kontaktelemente derart zu schalten, dass ein Stromfluss (8) zwischen dem jeweiligen ersten elektrischen Kontaktelement (6a) und einem vorgegebenen zweiten elektrischen Kontaktelement (6b) erzeugt wird.

10. Faserhalbzeug-Temperiervorrichtung (1) nach einem der vorhergehenden Ansprüche, **dadurch gekennzeichnet, dass** eine Bewegungsvorrichtung vorgesehen ist, die zum Bewegen des mindestens einen ersten und/oder zweiten elektrischen Kontaktelementes (6a, 6b) gegenüber dem Faservorformling (4) und/oder die zum Bewegen des Faservorformlings (4) gegenüber dem mindestens einen ersten und/oder zweiten elektrischen Kontaktelementes (6a, 6b) ausgebildet ist.

11. Faserhalbzeug-Temperiervorrichtung (1) nach Anspruch 10, **dadurch gekennzeichnet, dass** eine Steuereinheit vorgesehen ist, die zum Ansteuern der Bewegungsvorrichtung derart eingerichtet ist, dass eine relative Bewegung zwischen dem mindestens einen ersten und/oder zweiten Kontaktelement (6a, 6b) und dem Faservorformling während der Kontaktierung mit der jeweiligen äußeren Seite (5a, 5b) des Faservorformlings (4) gemäß einem vordefinierten Bewegungsmuster (9) unter Anlegung der elektrischen Spannung bewirkt wird.

12. Faserhalbzeug-Temperiervorrichtung (1) nach einem der vorhergehenden Ansprüche, **dadurch gekennzeichnet, dass** die elektrische Energiequelle (7) eingerichtet ist, an den ersten und/oder zweiten elektrischen Kontaktelementen (6a, 6b) eine über die Zeit ununterbrochene Spannung oder eine über die Zeit in diskreten Zeitabständen unterbrochene Spannung anzulegen.

13. Verfahren zum Temperieren von aus mehreren Faserhalbzeuglagen gebildeten Faservorformlingen, mit den Schritten:
a) Kontaktieren mindestens eines ersten elektrischen Kontaktelementes an einer ersten äußeren Seite des Faservorformlings;
b) Kontaktieren mindestens eines zweiten elektrischen Kontaktelementes an einer der ersten äußeren Seite gegenüberliegenden zweiten äußeren Seite des Faservorformlings;
c) Anlegen einer elektrischen Spannung durch eine elektrische Energiequelle an dem mindestens einen ersten und/oder zweiten elektrischen Kontaktelement zur Erzeugung eines Stromflusses durch die mehreren Faserhalbzeuglagen des Faservorformlings.

14. Verfahren nach Anspruch 13, **dadurch gekennzeichnet, dass** der Faservorformling unter eine Vakuumvorrichtung, die zu dem Formwerkzeug abgedichtet ist, angeordnet wird und dass das mindestens eine zweite Kontaktelement ebenfalls unter der Vakuumvorrichtung angeordnet wird, oder dass eine relative Bewegung zwischen den mindestens einen ersten und/oder zweiten Kontaktelementen (6a, 6b) während der Kontaktierung mit der jeweiligen äußeren Seite (5a, 5b) des Faservorformlings gemäß einem vordefinierten Bewegungsmuster unter Anlegung der elektrischen Spannung durchgeführt wird..

15. Verfahren nach einem der Ansprüche 13 oder 14, **dadurch gekennzeichnet, dass** an den ersten und/oder zweiten elektrischen Kontaktelementen eine über die Zeit ununterbrochene Spannung oder eine über die Zeit in diskreten Zeitabständen unterbrochene Spannung angelegt wird.

16. Verfahren nach einem der Ansprüche 13 bis 15, **dadurch gekennzeichnet, dass** eine Anpresskraft durch das mindestens eine erste Kontaktelement auf die erste äußere Seite und/oder durch das zweite Kontaktelement auf die zweite äußere Seite des Faservorformlings in Richtung des Faservorformlings zur Kompaktierung der Fasern im Bereich des ersten und/oder zweiten Kontaktelementes aufgebracht wird.

17. Verfahren nach einem der Ansprüche 13 bis 16, **dadurch gekennzeichnet, dass** bei einer Mehrzahl von ersten elektrischen Kontaktelementen und/oder zweiten elektrischen Kontaktelementen nacheinander jeweils an einem der ersten elektrischen Kontaktelemente (6a) eine elektrische Spannung angelegt und die die übrigen elektrischen Kontaktelemente derart geschaltet werden, dass ein Stromfluss (8) zwischen dem jeweiligen ersten elektrischen Kontaktelement (6a) und einem vorgegebenen zweiten elektrischen Kontaktelement (6b) erzeugt wird.
